Europäisches Patentamt

European Patent Office

Office européen des brevets

(11) Publication number: **0 247 011**
**A2**

# EUROPEAN PATENT APPLICATION

(21) Application number: 87850156.8

(22) Date of filing: 13.05.87

(51) Int. Cl.⁴: **B 32 B 27/16**

(30) Priority: 21.05.86 SE 8602304

(43) Date of publication of application:
**25.11.87 Bulletin 87/48**

(84) Designated Contracting States: **DE FR GB IT SE**

(71) Applicant: **SECO TOOLS AB**
**Fack**
**S-773 01 Fagersta (SE)**

(72) Inventor: **Loqvist, Kaj-Ragnar**
**Regnbägsvägen 40**
**S-773 00 Fagersta (SE)**

(74) Representative: **Eriksson, Kjell et al**
**Sandvik AB Patent Department**
**S-811 81 Sandviken (SE)**

(54) Clamping device for a positive cutting insert.

(57) The present invention relates to a device for clamping a positive cutting insert (10) with a hole in a site of a tool holder. The device constitutes of a relative its centre axis (19) symmetrical locking pin (13) with a head (15) having a smaller diameter than the hole (12) of the cutting insert (10), and a shaft (13a) that is in engagement with a hole in the tool holder. The locking pin (13) can be axially displaced in the hole and in clamped position of the cutting insert (10) the centre axis of the locking pin (13) is substantially parallel to but somewhat eccentrically located relative to the centre axis (20) of the hole (12),

The significant for the invention is that the head (15) of the locking pin (13) has a shoulder angle (α) that is equal to or somewhat bigger than the clearance angle (β) of the cutting insert (10).

Fig.1

EP 0 247 011 A2

## Description

### Clamping device for a positive cutting insert.

The present invention relates to a device for clamping a positive cutting insert with a hole in a site in a tool holder, said device constituting a relative to its centre axis symmetrical locking pin with a head that has a smaller diameter than the hole of the cutting insert and a shaft that is in engagement with a hole in the tool holder, and that the locking pin can be axially displaced in the hole, the centre axis of the locking pin in clamped position of the cutting insert being substantially parallel to but somewhat eccentrically located relative to the centre axis of the hole.

In locking pins of the type mentioned above it is for instance known from US-PS 3,533,150 to use a so called thread play when engaging the shaft of the locking pin. This arrangement allows the locking pin to tilt and thus causing the cutting insert to be clamped via the head of the locking pin. Since the locking pin has a shoulder angle almost equal to zero there is at least for positive cutting inserts a risk that the insert slips away.

From GB patent application 2 098 105 it is known a locking pin of the type mentioned above. However, in this case the locking pin has such a big shoulder angle that a relatively seen long axial displacement of the locking pin is required when exchanging the cutting insert.

The aim of the present invention is to disclose a device of the type mentioned above, said device using no thread play and still only a very small axial displacement of the locking pin being necessary when exchanging a cutting insert.

The aim of the invention beeing realized by a device that has been given the characteristics of the appending claims.

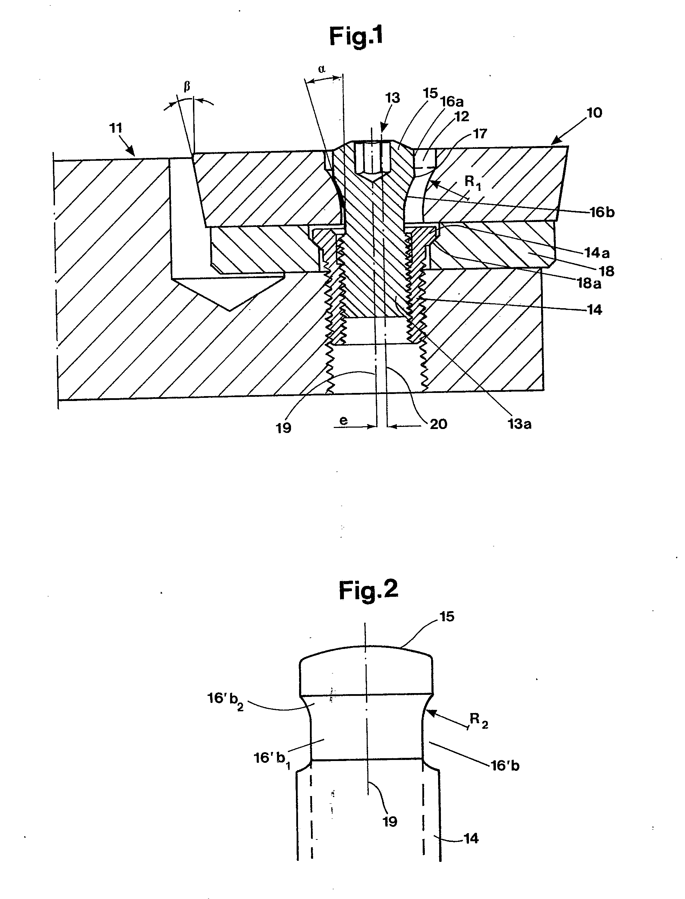

Below embodiments of the invention will be described, reference being made to the accompanying drawings where Fig. 1 discloses a first embodiment of a device according to the invention and its cooperation with the cutting insert and the tool holder; and Fig. 2 discloses a second embodiment of a device according to the invention.

The positive indexable cutting insert 10 of Fig. 1 is received in a site in a holder body 11.

In the indexable cutting insert 10 a central through hole 12 is provided.

The indexable cutting insert 10 is clamped in the site by a locking pin 13, that extends through the hole 12 and in its lower part comprises a threaded position 13a that cooperates with an internally and externally threaded sleeve 14, said sleeve 14 being mounted in the holder body 11.

As can be seen from Fig. 1 the head 15 of the locking pin 13 has a shape that widens in direction from the threaded portion 13 a. The head 15 comprises two portions 16a and 16b, the portion 16a being cylindrical while the portion 16b being in the shape of a truncated cone. The portions are connected to each other by a circular line 17. Through the arrangement of a cylindrical portion 16a above the conical portion 16b the exchange of the indexable cutting insert is simplified.

In the embodiment according to Fig. 1 the hole 12 is designed in accordance with ISO-standard, i.e. the hole 12 in its upper portion has a diameter that decreases towards the base surface of the cutting insert site while the lower portion of the hole 12 has a constant diameter.

In its upper portion the envelope surface of the hole 12 has a radius of curvature that is designated by $R_1$.

The indexable insert 10 is resting on a supporting plate 18 having a hole that is provided with a step 18a for cooperation with a collar 14a of the sleeve 14.

As is appearant from Fig. 1 the centre axis 19 of the locking pin 13 and the centre axis 20 of the hole 12 are parallel to each other but located at some distance e from each other, i.e. the locking pin 13 is eccentrically located in the hole 12. In this respect it should be pointed out that the locking pin 13 in all its parts is symmetrical with respect to its centre axis 19.

The shoulder angle of the conical portion 16b, i.e. the angle between the envelope surface and a line parallel to the centre axis 19 of the locking pin, is designated by $\alpha$.

The clearance angle of the indexable cutting insert 10 is designated by $\beta$. According to ISO-standard said angle is in the magnitude 7°.

By giving the shoulder angle $\alpha$ of the locking pin 13 a value that is substantially equal to or somewhat higher than the clearance angle $\beta$ essential advantages are gained compared to prior art.

As is apperant from Fig. 1 the conical portion 16b of the envelope surface in mounted position of the indexable cutting insert 10 abuts the wall of the hole 12 in the area of the portion having the radius of curvature equal to $R_1$.

If one assume that the angle $\alpha$ is equal to the angle $\beta$ there is only need to turn the locking pin 13 about half a turn (theoretically only a few degrees) in order to remove the indexable cutting insert 10 from the site.

The basic principle for the present invention is that the angles $\alpha$ and $\beta$ have the same value. However, since the head 15 of the locking pin 13 will be imparted to a resilient deflection when the conical portion 16b contacts the wall of the hole 12 it can from functional reasons be preferable to have the angle $\alpha$ somewhat bigger than the angle $\beta$. This difference in angles can also be favourable due to the fact that in such a case it is not necessary to rely only upon the friction force to maintain the cutting insert 10 in mounted position.

In the embodiment disclosed in Fig. 2 the lower conical portion has been replaced by a composite portion 16'b that comprises a cylindrical portion 16'b$_1$ and a rotary symmetrical portion 16'b$_2$ that has an envelope surface having a radius of curvature designated $R_2$. The transition between said portions is continuous.

It is at once realized that in the embodiment according to Fig. 2 a concave surface of the portion

16'b$_2$ will cooperate with the upper portion of the hole 12 having a convex surface. Therefore, contact between the locking pin and the cutting insert will be established along a somewhat longer distance than in the embodiment according to Fig. 1. This means that the contact surface between the locking pin and the cutting insert is somewhat bigger in the embodiment according to Fig. 2 compared to the one of Fig. 1. The lower internal surface pressure that is achieved between the locking pin and the cutting insert in the embodiment according to Fig. 2 can be favourable, e.g. when choosing material for the locking pin.

The embodiment according to Fig. 2 also means a somewhat safer locking between the locking pin and the cutting insert due to the fact that a convex and a concave surface cooperate.

The invention is in no way restricted to the above described embodiments but can be freely varied within the scope for the appending claims.

**Claims**

1. Device for clamping a positive cutting insert (11) with a hole in a site in a tool holder, said device comprising a relative its centre axis (19) symmetrical locking pin (13) with a head (15) that has a smaller diameter than the hole (12) of the cutting insert (10), and a shaft (13a) that is in engagement with a hole in the tool holder, and that the locking pin (13) can be axially displaced in the hole said centre axis (19) of the locking pin (13) in clamped position of the cutting insert (10) being substantially parallel to but somewhat eccentrically located relative to the centre axis (20) of the hole (12), **characterized** in that the head (15) of the locking pin (13) in the area of contact between the head (15) and the wall of the hole has a shoulder angle ($\alpha$) that is equal to or somewhat bigger than the clearance angle ($\beta$) of the cutting insert (10).

2. Device according to claim 1, **characterized** in that the head (15) contacts the wall of the hole by a conical portion (16b).

3. Device according to claim 1 or 2, **characterized** in that the shaft (13a) of the locking pin (13) is connected to the tool holder via an internally and externally threaded sleeve (14).

4. Device according to claim 1, **characterized** in that the head (15) of the locking pin (13) comprises a concave portion (16'b$_2$).

5. Device according to any of the previous claims, **characterized** in that the shoulder angle for the head (15) of the locking pin (13) is 1° bigger than the clearance angle of the cutting insert (10).

6. Device according to any of the previous claims, **characterized** in that the portion of the wall of that cooperates with the locking pin (13) constitutes a surface curved in two directions said surface in a section along the centre axis (20) of the hole (12) bending towards said centre axis (20).

**Fig.1**

**Fig.2**